# FASCICULE DE BREVET EUROPEEN

(11) **EP 1 108 173 B1**
(45) Date de publication et mention de la délivrance du brevet: **18.08.2004**
(21) Numéro de dépôt: 00951589.1
(22) Date de dépôt: 15.06.2000
(51) Int. Cl.: F16K 17/38

(54) **SOUPAPE DE SURPRESSION**
ÜBERDRUCKVENTIL
RELIEF VALVE

(30) Priorité: 24.06.1999 FR 9908128
(43) Date de publication de la demande: 20.06.2001
(73) Titulaire: GIAT INDUSTRIES, 78000 Versailles (FR)
(72) Inventeur: VERNET, Robert, F-65800 Orleix (FR)
(74) Mandataire: Célanie, Christian
(86) Numéro de dépôt international: PCT/FR2000/001657
(87) Numéro de publication internationale: WO 2001/001026

(56) Documents cités:
- EP-A- 0 766 028
- DE-C- 530 601
- FR-A- 2 066 764
- FR-A- 2 343 951
- FR-A- 2 644 869
- US-A- 3 618 627
- US-A- 4 457 328

## Description

Le domaine technique de l'invention est celui des soupapes de surpression pour réservoir.

Ces soupapes ont pour fonction de permettre le déconfinement des réservoirs ou des enceintes contenant des fluides explosifs ou inflammables, déconfinement nécessaire notamment lors des incendies.

Ils sont par exemple utilisés dans le domaine de l'automobile ou bien de l'aéronautique pour éviter une montée excessive de la pression à l'intérieur du réservoir de carburant. Montée de la pression qui résulterait par exemple d'une élévation de la température lors d'un incendie et qui pourrait provoquer l'explosion du réservoir.

On connaît déjà des soupapes comprenant un clapet qui obture une ouverture permettant de faire communiquer l'intérieur du réservoir avec l'extérieur. Le clapet est maintenu dans sa position d'obturation par un moyen ressort.

Lorsque la pression à l'intérieur du réservoir dépasse un certain niveau (qui dépend de l'effort de tarage du ressort) le clapet s'ouvre et permet de réduire la pression à l'intérieur du réservoir. On évite ainsi les surpressions dues par exemples aux échauffements réduits provoqués par les conditions météorologiques.

L'inconvénient d'un tel système est qu'il ne permet pas de réagir suffisamment rapidement à un accroissement brutal de la pression qui pourrait être provoqué par un incendie.

On connaît également, par exemple par le brevet FR2764862, des dispositifs de vidange d'urgence de réservoir dans lesquels une paroi est découpée pyrotechniquement pour libérer le contenu du réservoir.

Ces dispositifs sont encombrants et coûteux et ils ne permettent pas d'écrêter les surpressions minimes intervenant au cours du fonctionnement normal.

On connaît notamment par les brevets EP766028, US3618627 et DE530601 des soupapes dans lesquels la fusion d'un moyen de maintien assure la libération d'un ressort de maintien du clapet.

L'inconvénient de tels dispositifs est que la fusion du moyen de maintien est lente.

C'est le but de l'invention que de proposer une soupape permettant de pallier de tels inconvénients.

Ainsi l'invention propose une soupape de conception simple et peu coûteuse qui permet de pallier à la fois les variations de pression modérées qui apparaissent dans les conditions d'emploi normales et les variations de pression fortes liées aux environnements exceptionnels (incendies, séismes). Par ailleurs la soupape selon l'invention peut adopter sa position de déconfinement d'une façon très rapide.

Ainsi l'invention a pour objet une soupape de surpression pour un réservoir destiné à contenir un fluide et comprenant au moins un clapet obturant une ouverture permettant de faire communiquer l'intérieur du réservoir avec l'extérieur, clapet maintenu en position d'obturation par un moyen ressort prenant appui sur un support, soupape comportant des moyens permettant d'escamoter tout ou partie du support de ressort de façon à diminuer l'effort que le moyen ressort exerce sur le clapet, soupape caractérisée en ce que le support présente une partie fragilisée qui est susceptible d'être rompue par un piston mobile actionné par un générateur de gaz pyrotechnique.

Le support pourra être constitué par un élément tubulaire sur lequel sera aménagée une amorce de rupture annulaire qui délimitera ainsi la partie fragilisée sur laquelle le moyen ressort prend appui, le piston étant solidaire de cette partie fragilisée et ayant une direction de déplacement sensiblement perpendiculaire à l'axe de l'élément tubulaire.

Le support pourra être avantageusement déplacé par rapport au corps (par exemple par vissage) de façon à permettre de régler la valeur de l'effort de tarage que le ressort applique sur le clapet.

Le piston pourra avoir une forme sensiblement cylindrique et comporter un perçage perpendiculaire à l'axe du piston et à l'intérieur duquel pénétrera l'élément tubulaire.

Le piston pourra comporter un épaulement sur lequel s'exercera la pression des gaz engendrés par le générateur pyrotechnique.

Suivant une variante, le piston pourra comporter un percuteur destiné à initier un artifice pyrotechnique de signalisation.

Le générateur de gaz pyrotechnique pourra être actionné par un moyen de commande électronique relié à au moins un capteur de température et/ou de choc et/ou de pression.

L'invention sera mieux comprise à la lecture de la description qui va suivre de différents modes de réalisation, description faite en référence aux dessins annexés et dans lesquels :
- la figure 1 est une vue en coupe d'une soupape de surpression suivant l'art antérieur, soupape représentée en position obturée,
- la figure 2 représente cette même soupape en position complètement ouverte,
- la figure 3 est une vue en coupe d'une soupape de surpression suivant l'invention, soupape représentée en position obturée,
- la figure 4 représente cette même soupape en position complètement ouverte.

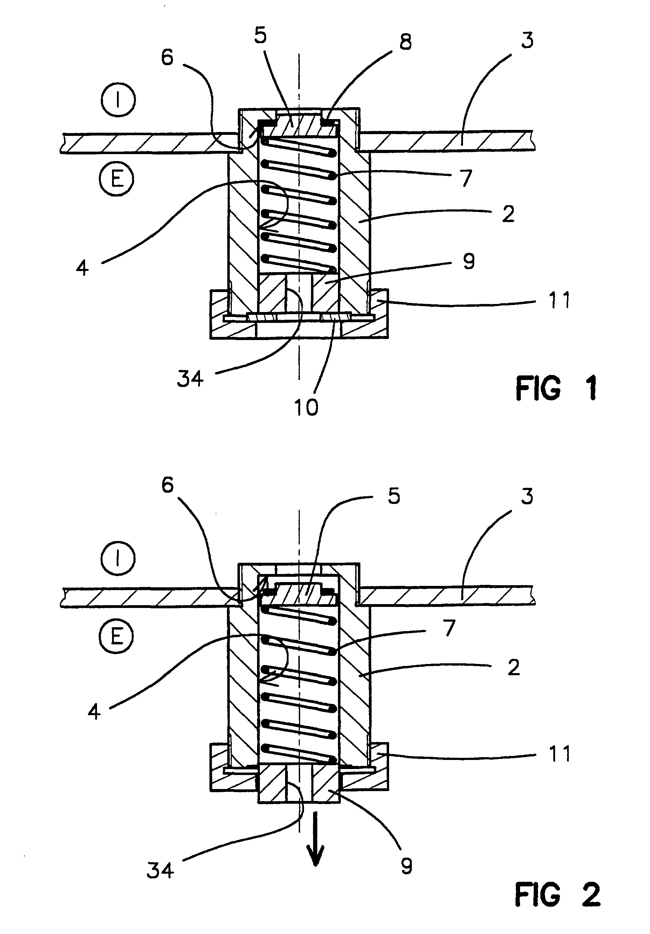

En se reportant à la figure 1, une soupape 1 suivant l'art antérieur comprend un corps 2 qui est fixé par exemple par vissage sur une enveloppe 3 d'un réservoir. Le réservoir est par exemple un réservoir de carburant pour automobile, notamment un réservoir « GPL » (gaz de pétrole liquéfié). La lettre I désigne le volume interne du réservoir, la lettre E désigne l'extérieur du réservoir.

Le corps 2 présente un alésage axial 4 à l'intérieur duquel est disposé un clapet 5 qui est maintenu appliqué sur une portée 6 du corps 2 par un ressort de compression 7. Un joint d'étanchéité torique 8 est interposé entre le clapet 5 et la portée 6. Le ressort 7 prend appui sur un support 9 qui est une bague annulaire ajustée à l'alésage 4.

La bague 9 est maintenue par rapport au corps 2 à l'aide d'un moyen de verrouillage qui est une rondelle 10, retenue par un écrou 11 vissé sur le corps 2.

La rondelle est réalisée en un matériau fusible pour une température bien définie (de l'ordre de 80 à 100°C). On pourra par exemple réaliser la rondelle en une matière plastique ou encore en un alliage eutectique.

La rondelle 10 constitue ainsi un moyen de verrouillage de la bague 9 qui est sensible à une élévation de température. Dans la position de la soupape qui est représentée à la figure 1, la bague support 9 assure un certain niveau de compression du ressort 7. Il en résulte un effort de tarage qui est appliqué sur le clapet 5. Lorsqu'il apparaît à l'intérieur I du réservoir une pression qui exerce sur le clapet 5 un effort supérieur à l'effort de tarage donné par le ressort 7, le clapet s'enfonce et laisse s'échapper la surpression de fluide. Le jeu radial entre le clapet 5 et l'alésage 4 est choisi suffisant pour autoriser une telle fuite de fluide qui s'écoule au travers du perçage 34 du support 9.

Ce fonctionnement est celui d'une soupape de surpression classique qui est capable de pallier les élévations de pression normales.

Lorsque le réservoir est soumis à une forte élévation de température résultant par exemple d'un incendie, la rondelle 10 fond. Ce moyen de verrouillage de la bague 9 disparaît donc et le ressort 7 ne se trouve plus appliqué contre le clapet 5. Il en résulte une disparition de l'effort de tarage exercé par le ressort et un déconfinement du réservoir qui empêche toute explosion de celui ci.

Cette soupape présente deux modes de fonctionnement différents adaptés aux risques occasionnés par l'environnement du réservoir.

A titre de variante, il est possible de réaliser la rondelle 10 et la bague 9 d'une façon monobloc en un matériau fusible ou encore de maintenir un ressort de dimension appropriée directement en appui sur la rondelle 10.

L'inconvénient d'une telle soupape est que la fusion du moyen de maintien est lente. Le passage du mode de fonctionnement normal au mode de fonctionnement d'urgence n'est pas suffisamment rapide. De plus il est nécessaire que la soupape se trouve directement au voisinage de la source de chaleur pour qu'elle adopte une position déconfinée. Or, en cas d'incendie du véhicule, il est possible que les flammes apparaissent au voisinage du moteur bien avant que le réservoir ne se trouve échauffé. La soupape selon l'invention permet d'assurer un déconfinement rapide même si le réservoir n'est pas encore échauffé. Le niveau de sécurité de cette soupape est donc supérieur.

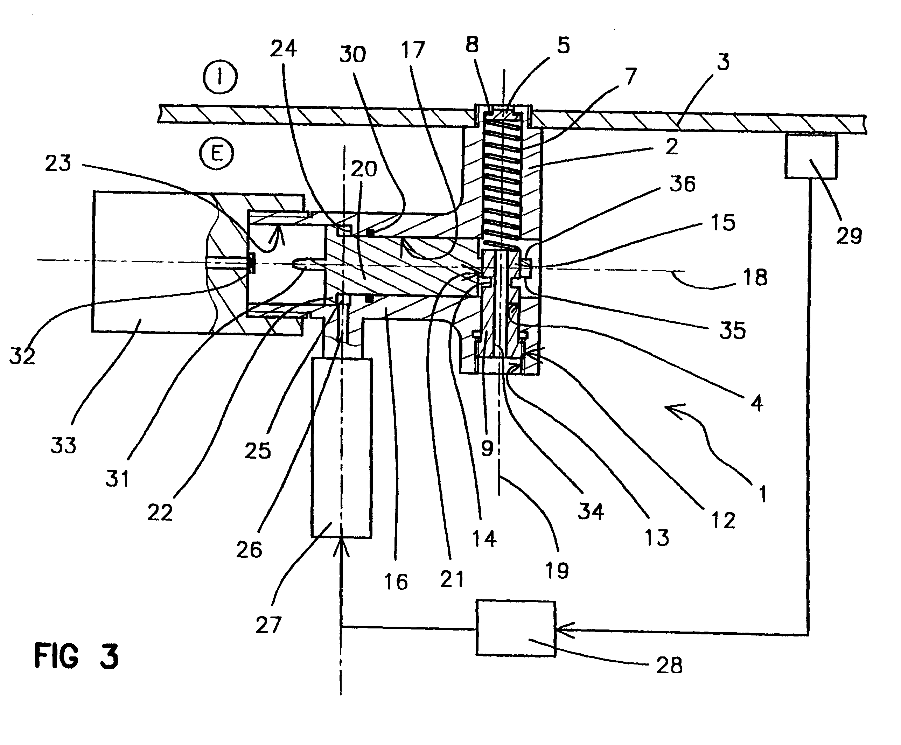

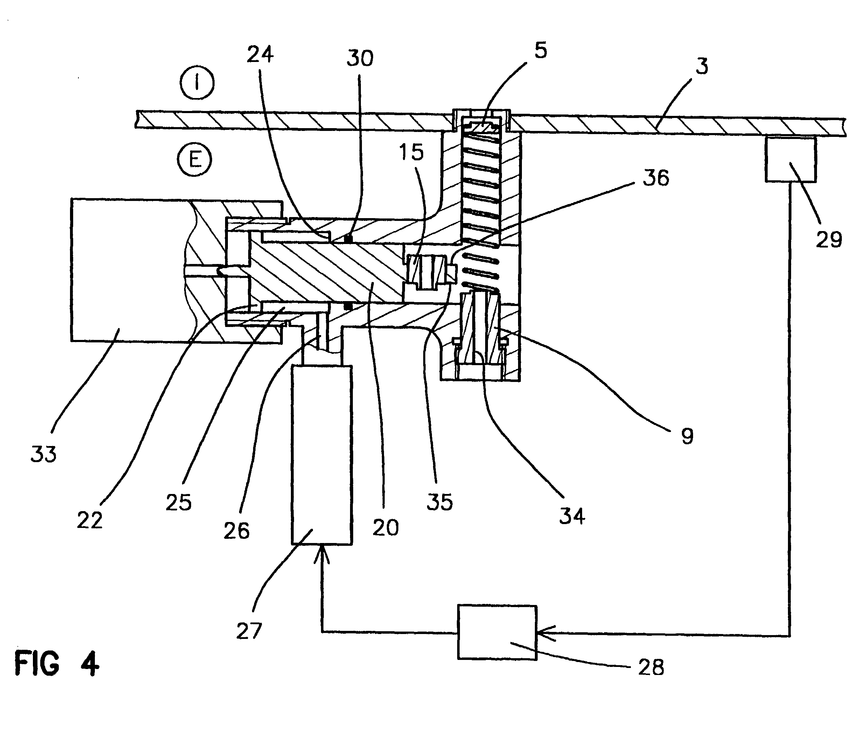

Les figures 3 et 4 montrent ainsi une soupape selon l'invention.

Suivant l'invention, le support 9 est réalisé sous la forme d'un élément tubulaire comportant une partie filetée 12 qui coopère avec un taraudage 13 réalisé dans l'alésage 4 du corps 2. Le vissage du support 9 permet de régler la valeur de l'effort de tarage que le ressort 7 applique sur le clapet 5 (dont la structure est la même que celle décrite en référence aux figures 1 et 2). L'élément tubulaire 9 comporte également une amorce de rupture annulaire 14, telle une gorge, qui délimite une partie fragilisée 15 sur laquelle le ressort 7 prend appui.

Suivant l'invention, le corps 2 comprend également un prolongement latéral 16 à l'intérieur duquel est aménagé un deuxième alésage 17 dont l'axe 18 est perpendiculaire à l'axe 19 du premier alésage 4.

Un piston 20 est ajusté coulissant dans ce deuxième alésage 17. Il a une forme sensiblement cylindrique et comporte au niveau d'une partie arrière un perçage 21 qui est perpendiculaire à l'axe 18 du piston 20 et à l'intérieur duquel pénètre l'élément tubulaire 9. Le perçage est délimité par deux faces planes 35/36 fraisées sur le piston 20.

Le piston 20 comporte également au niveau d'une partie avant un épaulement 22 qui est ajusté dans un alésage 23 coaxial au deuxième alésage 17 et de diamètre supérieur.

L'épaulement 22 délimite avec l'alésage 23 et le lamage 24 (qui raccorde les alésages 23 et 17) une chambre annulaire 25 qui est reliée par un conduit 26 à un générateur de gaz pyrotechnique 27.

Un tel générateur de gaz est bien connu dans le domaine de la sécurité automobile et ne sera donc pas décrit plus en détails. Il associe habituellement une composition génératrice de gaz et un inflammateur à initiation électrique.

Le déclenchement du générateur de gaz 27 est commandé par un moyen de commande électronique 28 qui est relié à au moins un capteur de température et/ou de pression 29 qui sera de préférence disposé au voisinage de l'enveloppe 3 du réservoir. On pourra prévoir plusieurs capteurs répartis autour du véhicule de façon à permettre un détection rapide d'un début d'incendie même à distance du réservoir.

Un joint torique 30 est interposé entre le piston 20 et le deuxième alésage 17 afin d'assurer l'étanchéité aux gaz engendrés par le générateur 27.

Le piston 20 comporte enfin au niveau de son extrémité avant un percuteur 31 qui est destiné à venir initier un inflammateur 32 qui allumera un artifice pyrotechnique de signalisation 33, par exemple une composition génératrice d'une fumée colorée (de telles compositions sont bien connues de l'Homme du Métier).

Le fonctionnement de cette soupape est le suivant.

Comme dans la soupape des figures 1 et 2, lorsqu'il apparaît à l'intérieur I du réservoir une pression qui exerce sur le clapet 5 un effort supérieur à l'effort de tarage donné par le ressort 7, le clapet s'enfonce et laisse s'échapper la surpression de fluide. Le jeu radial entre le clapet 5 et l'alésage 4 est choisi suffisant pour autoriser une telle fuite de fluide qui s'écoule au travers du perçage 34 de l'élément tubulaire 9.

Lorsque le réservoir est soumis à une forte élévation de température résultant par exemple d'un incendie, le capteur de température 29 détecte l'échauffement excessif auquel est soumise l'enveloppe 3 du réservoir. A titre de variante, le capteur 29 peut être un capteur de pression. Il détectera alors un accroissement de pression excessif à l'intérieur du réservoir. Le capteur unique pourra être associé à d'autres capteurs répartis dans le véhicule.

Le moyen de commande électronique va traiter cette information de température ou de pression et provoquera le déclenchement du générateur de gaz pyrotechnique 27.

La pression des gaz engendrés par le générateur pyrotechnique 27 s'exerce à l'intérieur de la chambre annulaire 25 et sur l'épaulement 22 du piston 20. Ce dernier se déplace donc dans son alésage et il provoque le cisaillement du support 9 au niveau de la gorge 14. La partie fragilisée 15 se sépare du reste du support 9 et elle est entraînée par le piston 20 (voir la figure 4).

Le ressort 7 ne se trouve donc plus en appui sur le support 9. Il en résulte une disparition de l'effort de tarage exercé par le ressort et un déconfinement du réservoir qui empêche toute explosion de celui ci.

Dans le même temps le piston 20 initie par l'intermédiaire de l'inflammateur 32 l'artifice de signalisation. Celui ci émet une fumée colorée qui informe les personnes situées à proximité du réservoir que la soupape a été déclenchée.

L'avantage de l'invention est que la soupape peut adopter sa position de déconfinement d'une façon très rapide. On s'affranchit alors du temps nécessaire pour provoquer la fusion d'un organe de verrouillage comme le prévoyait la soupape connue suivant les figures 1 et 2.

L'instant de déclenchement du déconfinement peut également être facilement maîtrisé et être associé à divers événements extérieurs susceptibles d'affecter la sécurité. On associera pour cela différents capteurs disposés à des emplacements appropriés. On pourra ainsi combiner des capteurs de températures avec des capteurs de pression ou encore avec des capteurs détectant un choc au voisinage du réservoir par exemple lors d'un accident de la route pour un véhicule automobile.

Diverses variantes sont possibles sans sortir du cadre de l'invention. Ainsi il est possible de définir une soupape de surpression dépourvue d'artifice de signalisation.

## Revendications

1. Soupape de surpression (1) pour un réservoir destiné à contenir un fluide et comprenant au moins un clapet (5) obturant une ouverture permettant de faire communiquer l'intérieur (I) du réservoir avec l'extérieur (E), clapet maintenu en position d'obturation par un moyen ressort (7) prenant appui sur un support (9), soupape comportant des moyens (10,20) permettant d'escamoter tout ou partie du support (9) de ressort de façon à diminuer l'effort que le moyen ressort (7) exerce sur le clapet (5), soupape **caractérisée en ce que** le support (9) présente une partie fragilisée (15) qui est susceptible d'être rompue par un piston mobile (20) actionné par un générateur de gaz pyrotechnique (27).

2. Soupape de surpression suivant la revendication 1, **caractérisée en ce que** le support (9) est constitué par un élément tubulaire sur lequel est aménagée une amorce de rupture annulaire (14) qui délimite ainsi la partie fragilisée (15) sur laquelle le moyen ressort (7) prend appui, le piston (20) étant solidaire de cette partie fragilisée et ayant une direction de déplacement (18) sensiblement perpendiculaire à l'axe (19) de l'élément tubulaire.

3. Soupape de surpression suivant la revendication 2, **caractérisée en ce que** le support (9) peut être déplacé par rapport au corps de façon à permettre de régler la valeur de l'effort de tarage que le ressort (7) applique sur le clapet (5).

4. Soupape de surpression suivant la revendication 2 ou 3, **caractérisée en ce que** le piston (20) a une forme sensiblement cylindrique et comporte un perçage (21) perpendiculaire à l'axe (18) du piston (20) et à l'intérieur duquel pénètre l'élément tubulaire (9).

5. Soupape de surpression suivant la revendication 4, **caractérisée en ce que** le piston (20) comporte un épaulement (22) sur lequel s'exerce la pression des gaz engendrés par le générateur pyrotechnique (27).

6. Soupape de surpression suivant l'une quelconque des revendications 1 à 5, **caractérisée en ce que** le piston (20) comporte un percuteur (31) destiné à initier un artifice pyrotechnique de signalisation (33).

7. Soupape de surpression suivant l'une quelconque des revendications 1 à 6, **caractérisée en ce que** le générateur de gaz pyrotechnique (27) est actionné par un moyen de commande électronique (28) relié à au moins un capteur de température et/ou de choc et/ou de pression (29).

## Patentansprüche

1. Überdruckventil (1) für einen Tank, der dafür vorgesehen ist, ein Fluid aufzunehmen, und wenigstens ein Sperrventil (5) umfasst, das eine Öffnung verschließt, welche es erlaubt, das Innere (I) des Tanks mit dem Außenbereich (E) in Verbindung treten zu lassen, wobei das Sperrventil durch ein sich auf einem Träger (9) abstützendes Federmittel (7) in Verschlussposition gehalten wird, wobei das Ventil Mittel (10, 20) umfasst, die es erlauben, den ganzen Träger (9) oder Teil des Trägers (9) der Feder so einzuziehen, dass die Spannung, die das Federmittel (7) auf das Sperrventil (5) ausübet, verringert wird, wobei das Ventil **dadurch gekennzeichnet ist, dass** der Träger (9) einen versprödeten Teil (15) aufweist, der dazu geeignet ist, durch einen beweglichen Kolben (20), der von einem pyrotechnischen Gaserzeuger (27) betätigt wird, zerbrochen zu werden.

2. Überdruckventil nach Anspruch 1, **dadurch gekennzeichnet, dass** der Träger (9) von einem rohrförmigen Element gebildet wird, auf dem eine ringförmige Sollbruchstelle (14) angebracht ist, die so den versprödeten Teil (15), auf dem sich das Federmittel (7) abstützt, abgrenzt, wobei der Kolben (20) fest mit diesem versprödeten Teil verbunden ist und eine zur Achse (19) des rohrförmigen Elementes im Wesentlichen senkrechte Bewegungsrichtung (18) besitzt.

3. Überdruckventil nach Anspruch 2, **dadurch gekennzeichnet, dass** der Träger (9) in Bezug auf den Körper derart verschoben werden kann, dass es ermöglicht wird, den Wert der Einstellkraft, welche die Feder (7) auf das Sperrventil (5) ausübt, zu regeln.

4. Überdruckventil nach Anspruch 2 oder 3, **dadurch gekennzeichnet, dass** der Kolben (20) eine im Wesentlichen zylindrische Form besitzt und eine Bohrung (21) senkrecht zur Achse (18) des Kolbens (20) umfasst, in deren Inneres das rohrförmige Element (9) eindringt.

5. Überdruckventil nach Anspruch 4, **dadurch gekennzeichnet, dass** der Kolben (20) eine Schulter (22) beinhaltet, auf die der Druck der von dem pyrotechnischen Erzeuger (27) erzeugten Gase wirkt.

6. Überdruckventil nach irgendeinem der Ansprüche 1 bis 5, **dadurch gekennzeichnet, dass** der Kolben (20) einen Schlagbolzen (31) enthält, der dafür vorgesehen ist, ein Anzeige-Zündmittel (33) zu initiieren.

7. Überdruckventil nach irgendeinem der Ansprüche 1 bis 6, **dadurch gekennzeichnet**, **dadurch gekennzeichnet, dass** der pyrotechnische Gaserzeuger (27) durch ein elektronisches Steuermittel (28), das mit wenigstens einem Temperatursensor und/oder Aufprallsensor und/oder Drucksensor (29) verbunden ist, betätigt wird.

## Claims

1. A pressure control valve (1) for a tank intended to contain a fluid and comprising at least one flap (5) obturating an aperture linking the inside (I) and the outside (E) of the tank, such flap being held in the obturating position by spring means (7) pressing on a support (9), such valve incorporating means (10, 20) allowing the retraction in whole or in part of the spring support (9) such as to reduce the pressure exerted by the spring (7) on the flap (5), such valve ***characterised in that*** the support (9) has an embrittled part (15) able to be fractured by a mobile piston (20) activated by a pyrotechnic gas generator (27).

2. A pressure control valve according to Claim 1, **characterised in that** the support (9) is constituted by a tubular element on which a ring-shaped incipient fracture (14) is arranged that thus delimits the embrittled part (15) on which the spring means (7) press, said piston (20) being integral with this embrittled part and having a direction (18) of displacement substantially perpendicular to the axis (19) of the tubular element.

3. A pressure control valve according to Claim 2, **characterised in that** the support (9) is displaced with respect to the body such as to regulate the value of the taring force exerted by the spring (7) on the flap (5).

4. A pressure control valve according to Claim 2 or 3, **characterised in that** piston (20) is substantially cylindrical in shape and incorporate a drill-hole (21) perpendicular to the axis (18) of the piston (20) and inside which the tubular element (9) penetrates.

5. A pressure control valve according to Claim 4, **characterised in that** the piston (20) incorporates a shoulder (22) onto which the gases generated by the pyrotechnic generator (27) exert their pressure.

6. A pressure control valve according to any one of Claims 1 to 5, **characterised in that** the piston (20) incorporates a firing pin (31) intended to strike a pyrotechnic signalling device (33).

7. A pressure control valve according to any one of Claims 1 to 6, **characterised in that** the pyrotechnic gas generator (27) is activated by electronic control means (28) connected to at least one temperature and/or shock and/or pressure sensor (29).
